# EUROPEAN PATENT APPLICATION

(11) **EP 4 717 511 A2**
(43) Date of publication of application: **01.04.2026**
(21) Application number: 26158393.4
(22) Date of filing: 06.04.2022
(51) Int. Cl.: B60L 53/16

(54) **CHARGING SYSTEM WITH COOLING SYSTEM**

(30) Priority: 08.04.2021 US 202163172304 P
(62) Divisional of application: 22719701.9
(71) Applicant: Tesla, Inc., Austin, TX 78725 (US)
(72) Inventor: SASARIDIS, Dino, Austin, TX 78725 (US); WESTFALL, Mark, Austin, TX 78725 (US); HOGAN, Paul, Austin, TX 78725 (US); HOMER, Jacob, Austin, TX 78725 (US); ZHANG, Jiong, Austin, TX 78725 (US)
(74) Representative: Zacco Sweden AB

(57) **Abstract**

A direct cooling method and system in charging system utilizing a water-based conductive fluid. The charging system includes a conductive fluid reservoir that provides conductive fluid to charging system components. The charging system further defines conductive fluid return paths for the conductive fluid. The length of a fluid path is specified to exceed a minimal resistance threshold based on the product of the resistivity and return path length. The system can include the incorporation of feedback loop into the charging system that can measure the electrical resistance of the conductive fluid.

## Description

### CROSS-REFERENCE TO RELATED APPLICATION

This application claims the benefit of U.S. Provisional Application No. 63/172304 entitled CHARGING SYSTEM WITH COOLING SYSTEM and filed on April 8, 2021.

### BACKGROUND

Some vehicles, such as electric vehicles or hybrid-electric vehicles, often include or require additional infrastructure that facilitate operation or preparation for operation of the vehicle. For example, electric vehicles may require access to charging system infrastructure that allows for the delivery of power for charging battery packs or other electrical components.

The advancement of electric vehicles components, such as battery packs, has created an increased need power provided by charging equipment that delivers electric power. Some such applications, such certain fast-charging vehicle charging systems, are designed to work with continuous currents of 100 Amps or more. With the advancement of larger electric vehicles, such as semi-tractor electric vehicles, charging duties have increased. Resultantly, charging cables may be required to service charging at 2,000 Amps or more. Higher current flow in a charging cable (e.g., the conductors) results in the generation of more heat, which must be removed to prevent overheating and damage to the charging cable. As a result, the conductors of the charging cables have traditionally been sized larger to match higher current draws, resulting in greater bulk, cost, and difficulty in handling.

### BRIEF DESCRIPTION OF THE DRAWINGS

Various features will now be described with reference to the following drawings. Throughout the drawings, reference numbers may be re-used to indicate correspondence between referenced elements. The drawings are provided to illustrate examples described herein and are not intended to limit the scope of the disclosure.
FIG. 1 is a block diagram depicting an illustrative charging system including a direct cooling system in accordance with aspects of the present application;
FIG. 2 is a flow diagram of an illustrative fluid resistance management routine implemented by a feedback and mitigation component; and
FIGS. 3-7 are block diagrams of an illustrative connector component for utilization with the charging system of FIG. 1.

### DETAILED DESCRIPTION

Generally described, one or more aspects of the present disclosure relate to systems and techniques for cooling charging systems. Most electric charging systems include charging cable that can be used to transport or deliver electric power from one system to another. For example, a charging cable can be used to deliver electric power from a charging station to an electric vehicle such as a car, semi-truck or other vehicle/device that may have one or more energy storage cells. Typically, the charging systems include cable systems that include one or more pairs of conductors for the transmission of electrical current from the infrastructure equipment to a connector component.

When the charging system delivers electric power at a high current (e.g., 100 Amps or more), the current flow within the charging cable can result in high amounts of heat based on the resistive properties of the conductors within the cable components. In some situations, this heat can cause several issues. For example, the heat can damage components of the charging system or cable and can make handling the heated cable very difficult or dangerous for a user. In charging systems that deliver power at even higher currents (e.g., 1000 Amps or more), mitigating the heat generated by the transmission of current through the charging cables can be vital to the safety of the operators and to the lifespan of the components involved in the charging system. In the simplest example, cable system can include, or be configured with, thermal insulation or other protective layers to prevent external transmission or radiation of heat from the charging systems, namely, the cable systems or connector components. However, increasing the amount of thermal insulation to accommodate for higher heat generation environments can result in increased bulkiness. This can decrease usability of the charging system.

In accordance with aspects of the present application, to remove heat from the charging cable, a cooling system can be implemented into the charging process. For example, a charging cable for an electric vehicle can be cooled by a liquid cooled system. Using liquid cooling to remove heat from a charging cable can provide several advantages. For example, using liquid cooling can allow for a higher current to be fed through the charging cable, as the effects of the heat are removed or greatly reduced. Additionally, using liquid cooling can allow for a more convenient cable design. With the effects of the heat being removed or greatly reduced, bulky and large cables are no longer needed to protect the equipment and user from the generated heat. Thus, the charging cable can be a lighter cable, thinner cable, or a more flexible cable.

One approach to liquid cooled systems for charging cables relates to embodiments associated with indirect cooling relative to the pairs of conductors included in the cable components. Indirect cooling systems typically include a conductive fluid that is separated from the conductors and sockets of the charging system by an insulating barrier. For example, the conductive fluid/conductors may be separated by a conduit that has electrical insulation properties to electrically isolate the conductive fluid from the pairs of conductors while allowing for thermodynamic transfer of heat from the pairs of conductors to the conductive fluid. In these approaches, the conductive fluid and insulating barrier thermal properties are selected to draw out sufficient heat from the conductors while isolating the conductive fluid from the current passing through the conductor.

Another approach to liquid cooled systems for charging cables relates to embodiments associated with direct cooling relative to the pairs of conductors included in the cable components. Direct cooling system typically include a non-conductive fluid that is not separated from the conductors and sockets of the charging system. In these approaches, the non-conductive fluid, such as oil, is selected with a balance of drawing out sufficient heat from the conductors while mitigating the current passing through the conductor directly in contact with the fluid. More specifically, in use, the non-conductive liquid heat transfer media exits the cooling conduit near the internal chamber and then contacts one or both charging conductors to remove heat from those terminal ends of the conductors within the chamber. The size and the dimensions of the internal chamber are designed to have a fairly small hydrodynamic diameter such that a relatively rapid flow of the liquid heat transfer media will interact with the charging conductors. However, the properties of traditional non-conductive fluids, such as oil-based fluids, limit the dimension of the internal chamber such as due to density, viscosity, and other properties associated with the non-conductive fluid.

Generally described, aspects of the present application relate to a direct cooling method and system in which a charging system includes a cooling system utilizes conductive fluids for heat dissipation. More specifically, one or more aspects related to the utilization of a water-based conductive fluid, which is generally considered to better thermal properties for dissipating heat relative to many non-conductive fluids otherwise utilized in a direct contact embodiments. Water in direct contact with conductors and sockets is traditionally problematic because of the resulting electrolysis of the water due to the applied voltage to the conductors/sockets. Electrolysis can result in arc generation in some applications or hydrogen generation, both of which present undesirable results or side effects in the charging process.

Illustratively, the charging system of the present application can utilize one or more aspects or combination of aspects of the present application to facilitate a direct cooling-based charging system utilizing water-based conductive fluid. In one aspect, the direct cooling-based charging system can utilize lower conductivity fluids such as an ethylene glycol and water mixture that is commonly utilized in various antifreeze formulations. Pure ethylene glycol has a specific heat capacity about one half that of water and lowers the specific heat capacity of water mixtures relative to pure water. In another aspect, the geometry of the charging system, and more specifically, the length of the fluid path is configured to keep the resulting resistance of the fluid path high. Accordingly, the resulting leakage current is relatively low, such that the potential for hydrogen generation is mitigated substantially. Additionally, since arc generation occurs abruptly at lower separations than required to mitigate hydrogen generation, the selected fluid path lengths would also serve to mitigate arc generation.

In another aspect, aspects of the present application can include the incorporation of feedback loop into the charging system that can measure the electrical resistance of the conductive fluid. In this aspect, a sensing component can be incorporated to measure leaking current from the fluid and determine the electrical resistance of the conductive fluid. The sensing components may be illustratively configured to measure leakage current at various measurement points relative to ground and corresponding to components of the charging system. The charging system can further incorporate ion filters, to modify the resistivity of the conductive fluid, such as to increase the resistivity properties of the conductive fluid and accordingly the resistance of the fluid path. In still further aspects of the present application, the charging system can also utilize ground connections throughout the system components to mitigate the potential for leakage currents entering the fluid path. The leakage current can also result in hydrogen generation and arc generation.

Although aspects of the present application will be described in combination, one skilled in the relevant art will appreciate that one or more aspects may be incorporated without need for a combination. Additionally, although the various aspects of the present application will be described with regard to specific water-based fluids, one skilled in the art will appreciate that variations of conductive fluids may be included within the scope of the present application, namely, a combination of a conductive fluid with some coolant with resistance-controlled additives. Similarly, although the various aspects of the present application will be described with regard to application of the charging system to vehicles, one skilled in the relevant art will appreciate that these aspects of the present application may be applicable to other applications in which high voltage isolation and high performance heat transfer may be specified, such as in various industrial and residential charging systems, power electronics/semiconductor cooling, and the like. Accordingly, the disclosed embodiments should not be construed as limiting.

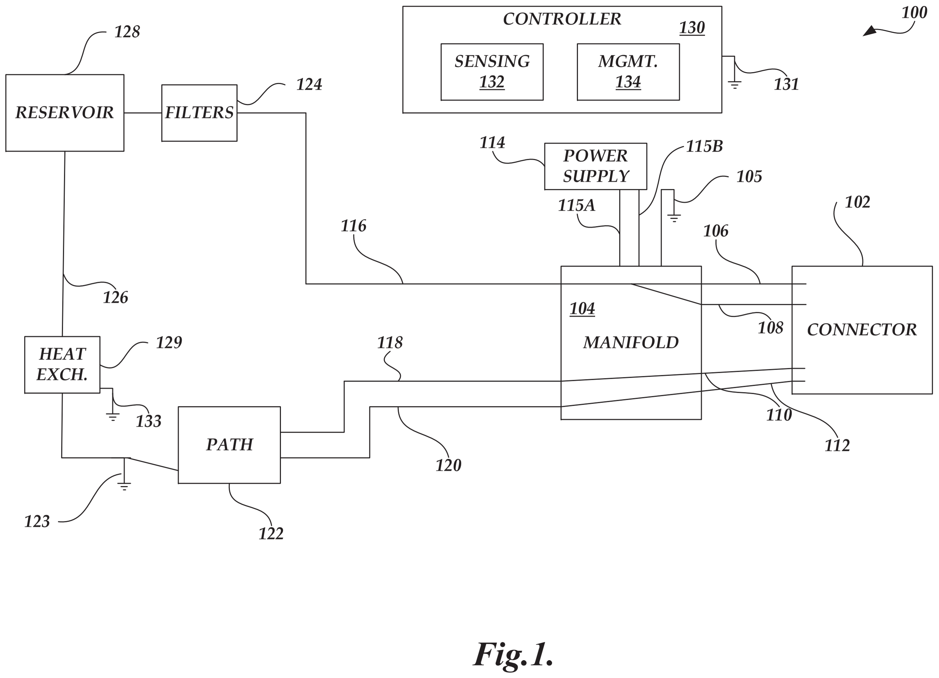

FIG. 1 is a block diagram of a logical representative of various components of a charging system 100. Illustratively, charging system 100 may be utilized in the context of a variety of electric vehicles. By way of non-limiting examples, an electric vehicle includes at least one drive motor (e.g., a traction motor), at least one gear box coupled to a corresponding drive motor, a battery and supporting electronic and processing components for operating the vehicle. Generally, the battery provides electricity to various components of the electric vehicle and to the drive motors to propel the electric vehicle using the drive motors. The electric vehicle can include a charging port, which can be used to receive energy to repeatedly charge battery. As applied to the present application, the charging system 100 will be described with regard to a physical coupling with a vehicle, such as a passenger vehicle, semi-truck, or other electric-based vehicle, in order to supply energy to the vehicle.

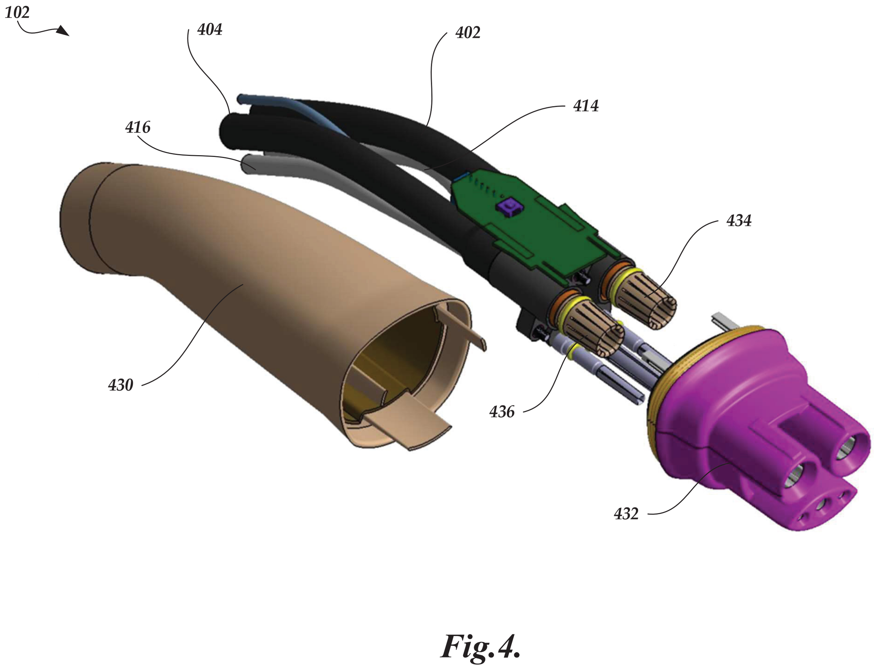

With reference now to FIG. 1, the charging system 100 includes a selection of components and configurations that facilitate the utilization of a water-based fluid in direct contact with the conductors. The charging system 100 includes a connector 102 that functions as the physical interface between the charging system 100 and one or more electric vehicles. Illustrative embodiments of different connectors 102 will be described with regard to FIGS. 4-7. The configuration of the connector 102 may vary based on the physical attributes of electric vehicle, the energy levels being transmitted to the electric vehicle receiving the energy, or other design or functional demands of the charging system 100, electric vehicle or the environment in which the charging system 100 is being provided. Accordingly, the illustrated connectors 102 should not be construed as limiting.

The connector 102 is physically connected to a manifold 104 that functions to receive and provide energy and cooling water to the connectors 102. As will be explained in greater detailed below, the manifold provides the connector 102 with power and cooling fluid supply 106, 108 and receives power and returned cooling fluid 110, 112. The manifold 104 receives energy from a power source 114 via supply lines 115A, 115B, which can include a variety of energy settings, including 500 Amps, 1000 Amps, 1500, Amps, 2000 Amps, 1500 Amps at 1500 Volts. The power settings are illustrative in nature and one skilled in the relevant art will appreciate that the amperage and voltage provided by the power source 114 may vary according to the desired task of the charging system 100, such as fast charging, overnight charging, and the power requirements of the vehicle being charged. The manifold 104 also include a common ground 105, which can function to mitigate leakage currents in the charging system 100 as will be described with regard to various other components of the charging system 100.

With continued reference to FIG. 1, the charging system 100 includes a number of additional components for isolating supply lines and return lines of cooling fluid in a manner to minimize the resistance presented by the fluid path. More specifically, in accordance with aspects of the present application, the resistance of a fluid path can be calculated as the product of the resistivity of the fluid path and length of fluid path divided by the area of the fluid path. Accordingly, a greater length of the fluid path will have a direct result in increasing the resistance presented by the fluid path to any potential voltage sources, such as the potential presented by the conductors in direct contact with the fluid path. At lengths in excess of 1.0 meters, 1.5 meters, 2.0 meters, 2.5 meters, 3.0 meters, 3.5 meters, and the like, the resistance of the fluid path can cause any potential leakage currents associated from the conductors to be below the thresholds for causing the generation of arc currents and hydrogen generation. Illustratively, the fluid path may be specified or defined such that the fluid path exceeds a minimal resistance threshold based on the product of the resistivity and length as described above. The fluid path may be a specified amount or defined as a multiple of the minimal resistance threshold length, such as both increments based on whole numbers (e.g., 2x, 3x, 4x, etc.) or percentages (e.g., 110%, 115%, 120%, etc.). One skilled in the relevant art will appreciate that such multiples are illustrative in nature and should not be construed as limiting.

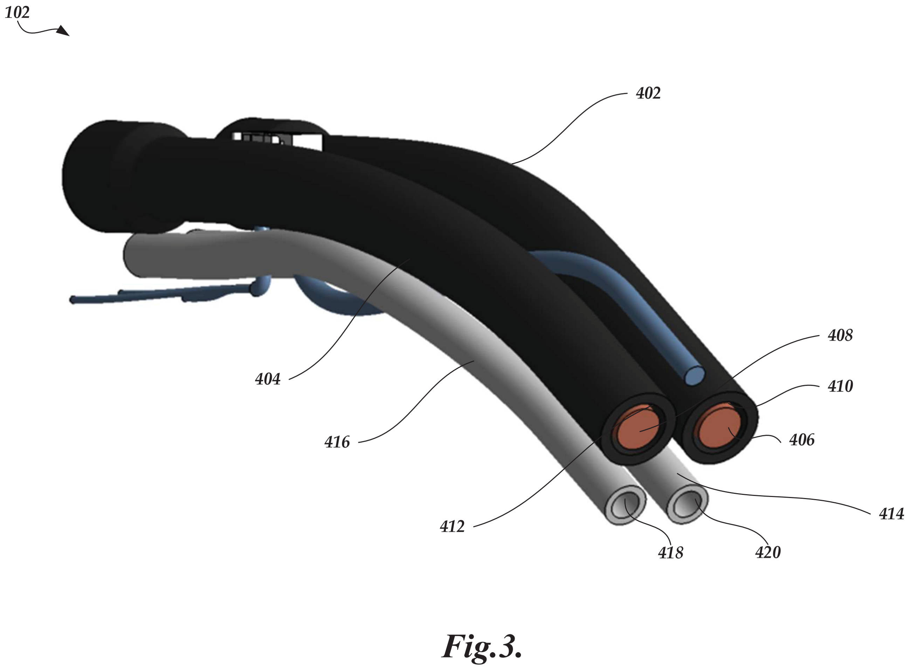

As will be further illustrated in FIG. 3 the charging system 100 includes a cooling fluid supply line 116 that originates from a reservoir 128 and leads to the manifold 104. The reservoir 128 provides the cooling fluid to the supply line 116 and can include additional pumps or other components for causing the fluid flow and processing the fluid as required. The cooling fluid supply line 116 can correspond to a singular line that will supply cooling fluid to both positive and negative conductors associated with the connector 102. Also leading from the manifold are two separate return lines 118, 120 that have been respectively in direct contact with the positive and negative conductors of the connectors. The return lines 118, 120 are illustratively isolated from each other along the minimum path length 122 that has been determined to provide the fluid path the minimum required resistance (e.g., exceeding the minimal resistance threshold length) based on the resistivity property of the fluid and the area of the lines 116, 118, 120. The fluid path is illustratively connected to a common ground 123.

After the path has been exceeded, the fluid paths 118, 120 can merge into a return fluid path 126 that feeds into in a heat exchanger 129, such as a radiator or other components that are configured to remove the heat in the fluid. The fluid path then proceeds to the reservoir 128. The heat exchanger 129 is illustratively connected to a common ground 133.

As described above, in accordance with aspects of the present application, the charging system 100 can include a feedback mechanism and mitigation components that can cause the modification of one or more aspects of the fluid path for purposes of mitigating arc generation, hydrogen generation, or a combination thereof. Illustratively, in some embodiments, the feedback mechanism can include a controller component 130 that includes a sensing component 132 configured to measure the leakage current in the fluid path and approximate the resistance of the fluid path. The sensing component 132 can utilize the measured values of the leakage current to determine resistance value based on the known voltage of the conductor and the measured leakage current. The controller 130 provide a management component 134 can process the measured resistance and then determine one or more mitigation techniques for modifying the resistance of the cooling fluid, such as by modifying the resistivity of the fluid, modifying the area of the fluid path lines, or modifying the length of the fluid path or a combination. More specifically, in some embodiments, the controller 130 can control one or more ion filters 124 that can cause a modification of the ionization of the fluid path to modify the resistivity of the cooling fluid. The filters 124 can also utilize alternative methodologies to cause such modifications as may be possible based on the properties or characteristics of the cooling fluid.

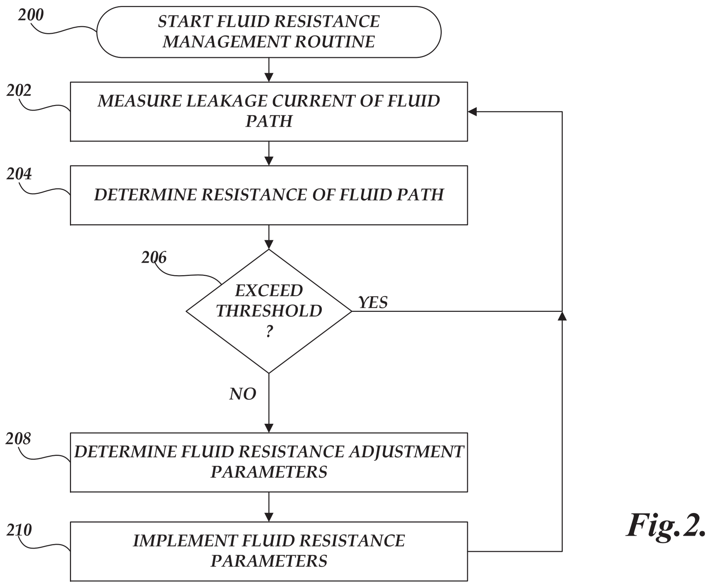

As illustrated in FIG. 1, the filters 124 may be located between the reservoir 128 and the manifold 104 along the cooling fluid supply line 116 so that the resistivity of the fluid is adjusted prior to entering the manifold. As also illustrated in FIG. 1, the controller component 130 can be connected to a common ground 131 to further mitigate the introduction of leakage current that can cause arc generation or hydrogen generation in the cooling fluid. Although illustrated as part of the charging system 100, the feedback and corrective mechanisms of the charging system 100 are not mandatory and may be removed in some embodiments. An illustrative routine 200 (FIG. 2) will be utilized to illustrate a fluid resistance management routine.

Illustratively, components of the controller 130 may include physical hardware components, one or more virtualized components, or a combination thereof. Additionally, the components of the controller 130 or the functionality attributed by the controller 130 may be implemented in a virtualized environment. Illustratively, the controller 130 can include a processing unit, a network interface, a computer-readable medium drive, and an input/output device interface, all of which may communicate with one another by way of a communication bus. The components of the controller 130 may be physical hardware components or implemented in a virtualized environment.

The memory may include computer program instructions that the processing unit executes in order to implement one or more embodiments. The memory generally includes RAM, ROM, or other persistent or non-transitory memory. The memory may store an operating system that provides computer program instructions for use by the processing unit in the general administration and operation of the controller 130. The memory may further include computer program instructions and other information for implementing aspects of the present disclosure. For example, in one embodiment, the memory includes sensing components 132 that are configured to obtain leakage current measurements for utilization in the feedback and mitigation processes described herein. The memory further includes a management component that is configured to implement a fluid management routine. Such components may be executed in separate computing devices (virtual or physical computing environments).

With reference now to FIG. 2, in some embodiments, a controller 140 or other processing component or logical unit, can be utilized to processing metering information and cause the implementation of mitigation techniques associated with an approximated resistance of the fluid path. As described above, the metering component 120 provide a controller 140 with a calculated resistance value based on the known voltage of the conductor and the measured leakage current. At block 202, the controller 140 obtains a measurement from the meter component of the leakage current in the fluid path. The metering component 120 can be configured to provide the measured current continuously or on some configured time interval. In other embodiments, the controller 140 can request metering information synchronously or asynchronously.

At block 204, the controller 140 calculates the resistance of the fluid path based on the measured leakage current and the known voltage of the conductors. At decision block 206, a test is conducted to determine whether the calculated resistance exceeds one or more resistance thresholds. Illustratively, the one or more thresholds can be configured to be based on further determinations/calculations of whether the resistance of the cooling fluid is sufficiently high to cause any leakage voltage to not exceed the thresholds for hydrogen generation and arc generation. The thresholds may be manually set based on individual performance of the charging system 100, cumulative performance of a set of charging system 100, or other groupings. For example, the charging system thresholds can take into account variances in environmental factors by region, fluid compositions in the charging system 100, supporting infrastructure, variances in materials of the charging system 100, and the like. If the calculated resistance exceeds the one or more thresholds (e.g., the calculated resistance exceeds the minimum resistance required), the controller 140 is not required to implement any mitigation techniques and the routine 200 returns to block 202.

Alternatively, the calculated resistance does not exceed the one or more thresholds, the controller 140 may engage or cause one or more mitigation techniques to be implemented to result in a decrease of the resulting leakage current in the fluid path. Illustratively, the controller 140 can attempt to increase one of three factors that can cause a change in the resulting resistance of the fluid, namely, the resistivity of the cooling fluid, the length of the fluid path or the area of the return lines. In some embodiments, the length of the fluid path and area of the return lines may be fixed, which only allows the controller 140 to implement some mitigation techniques that increase resistivity of the cooling fluid. In other embodiments, if the charging system 100 includes some additional mechanical mitigation controls that can cause modification of the length of the fluid path or the area of the line, the controller 140 may be able to implement modifications to these attributes of the charging system 100 as well. Illustratively, in charging systems in which the resistivity of the cooling fluid can be controlled or influenced, the charging system 100 can be configured with ion filters to cause changes to the resistivity of the cooling fluid. Accordingly, at block 208, the controller 140 can determine the adjustment parameters, such as operational parameters of the ion filters that may be controller and desired results. At block 210, the controller 140 can cause the implementation of the fluid resistance parameters and the routine 200 returns to block 202 for continuous monitoring.

With reference to FIGS. 3-7, illustrative embodiments of connector 102 for utilization in a charging system 100 will be described. With reference to FIG. 4, the internal components of the connector 102 are illustrated. The components include outer jackets 402, 404 that each contain conductors 406, 408 carrying the energy from the power supply 114. The outer jackets 402, 404 can be of a diameter sufficient to encompass the charging conductors 406, 408 and to create cooling line return paths 410, 412 for the cooling fluid that is in direct contact with the charging conductors. The connector further includes to supply jackets 414, 416 for incoming cooling fluid via channels 418, 420. As illustrated in FIG. 1, the singular supply line 116 splits into supply jackets 414, 416 at the manifold 104. FIG. 4 represents an alternative view of the connector 102 further illustrating a cover 430 encompassing outer jackets 402, 404, and supply jackets 414, 416. The connector 102 can further include connectors 434, 436 that are configured to make the electrical connection between the conductors 406, 408 and the connection mechanism of an electric vehicle.

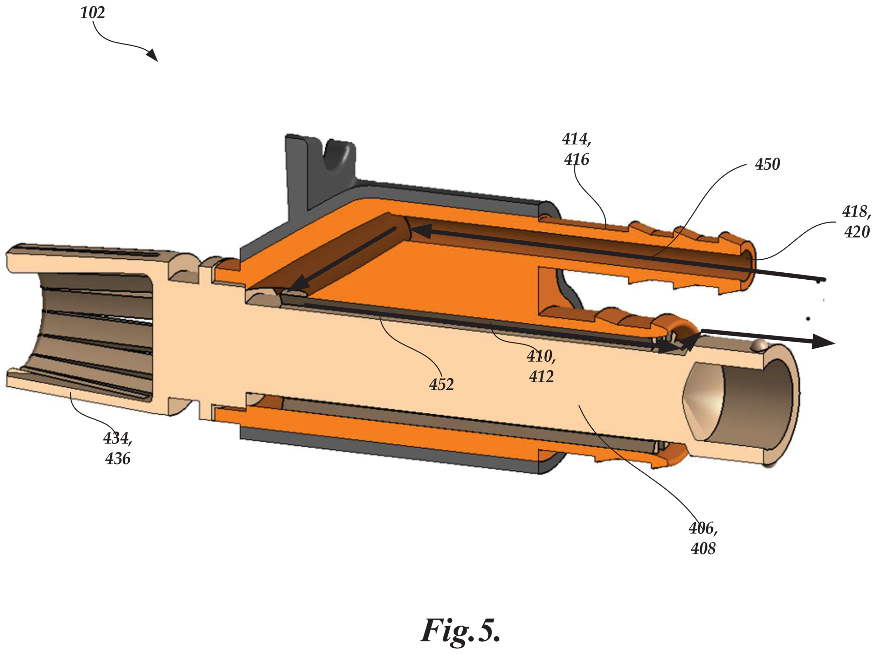

With reference to FIG. 5, a cut-away of a connector 102 of FIGS. 3 and 4 illustrating the flow of the cooling fluid will be described. As illustrated in FIG. 5, cooling fluid enters the connector 102 via the supply channels 410, 412 as illustrated at 450. The fluid continues through the connector 102 and makes direct contact with the conductors 406, 408 via channels 410, 412. The resulting cooling fluid can extract the heat generated by the conductors 406, 407 and is removed via the return channels at 452. Illustratively, in embodiments in which the cooling fluid is water-based, the fluid flow illustrated at 450 can be facilitated through narrower channels 418, 420 relative to channels that would otherwise have been required due if a non-conductive fluid was utilized, such as based on the viscosity, density or other properties of traditional non-conductive fluids. Accordingly, the connector and geometries illustrated in FIGS. 3-5 provide additional heat exchange and fluid flow for conductive fluids.

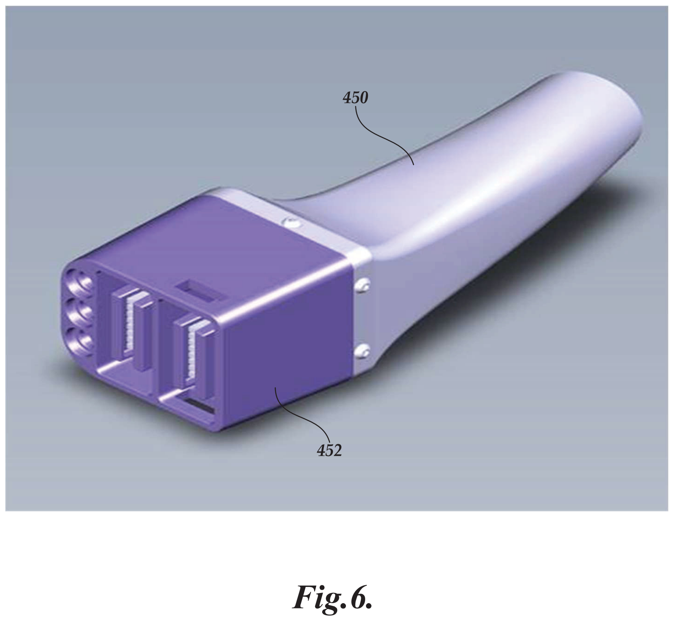

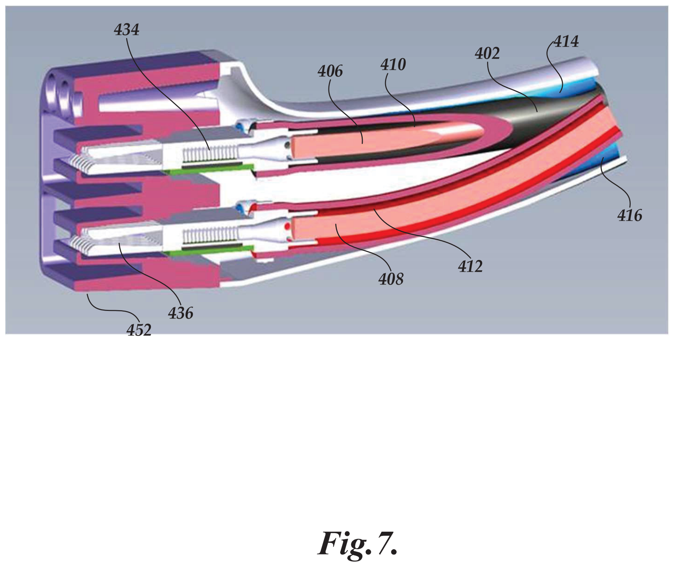

FIG. 6 illustrates an alternative embodiment of the controller 102 having an alternative cover 450 and interface 452, such as for utilization by different configurations of vehicles. However, as illustrated in FIG. 7, the utilization of the return channels 410, 412 and supply channels 414, 416 remains the same or substantially similar. Other embodiments may also be incorporated in accordance with aspects of the present application. As previously discussed, in embodiments in which the cooling fluid is water-based, the fluid flow illustrated at 450 can be facilitated through narrower channels 418, 420 relative to channels that would otherwise have been required due if a non-conductive fluid was utilized, such as based on the viscosity, density or other properties of traditional non-conductive fluids. Accordingly, the connector and geometries illustrated in FIGS. 6-7 also provide additional heat exchange and fluid flow for conductive fluids.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed air vent assembly. It is to be understood that the forms of disclosure herein shown and described are to be taken as representative embodiments. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.
Below please find some embodiments of the present disclosure.
[Embodiment 1] A cooling system for use in charging systems for electric components, the cooling system comprising:
   a conductive fluid reservoir providing conductive fluid to one or more charging system components along supply lines;
   a manifold receiving the conductive fluid from the conductive fluid reservoir and providing conductive fluid to a plurality of the charging system components, the plurality of charging system components including at least a connector and a cable system;
   first and second fluid return paths, wherein the first and second fluid return paths are electrically isolated and have a specified length exceeding a minimal resistance threshold based on the product of the resistivity of the conductive fluid and the specified length; and
   a heat exchanger to receive the conductive fluid from the first and second fluid return paths.
[Embodiment 2] The cooling system as recited in embodiment 1, further comprising a feedback and control component to determine resistive properties of the conductive fluid and adjust at least one resistive property of the conductive fluid.
[Embodiment 3] The cooling system as recited in embodiment 2, wherein the feedback and control component includes an ion filter to modify resistive properties of the conductive fluid.
[Embodiment 4] The cooling system as recited in embodiment 2, wherein the feedback and control component measures leakage current relative to a plurality of ground pints in the charging system.
[Embodiment 5] The cooling system as recited in embodiment 1, wherein the specified length is based on a multiple of the minimal resistance threshold.
[Embodiment 6] The cooling system as recited in embodiment 1, wherein the specified length is based on a percentage of the minimal resistance threshold.
[Embodiment 7] The cooling system as recited in embodiment 1, wherein the conductive fluid corresponds to an ethylene glycol and water mixture.
[Embodiment 8] The cooling system as recited in embodiment 1, wherein the first and second fluid return lines merge prior to connection with the heat exchanger, wherein the specified length corresponds to a length measured from the connector along the first and second fluid return lines prior to the merge.

## Claims

1. A cooling system (100) for electric components, the cooling system (100) comprising:
a connector (102, 434, 436) that connects to one or more electric vehicles;
a cable system including at least one pair of conductors (406, 408) connected to the connector (102, 434, 436);
a manifold (104) connected to the connector (102, 434, 436), the manifold (104) configured to provide conductive fluid to the cable system such that the at least one pair of conductors (406, 408) are in direct contact with the conductive fluid; and
first and second fluid return paths, wherein the first and second fluid return paths are configured to cause leakage currents associated with the at least one pair of conductors (406, 408) to be below a threshold associated with hydrogen generation or arc generation from the conductive fluid.

2. The cooling system of Claim 1, wherein the conductive fluid comprises a conductive liquid, and the manifold is configured to provide the conductive liquid to the cable system such that the at least one pair of conductors are in physical contact with the conductive liquid.

3. The cooling system of Claim 1, wherein the first and second fluid return paths each comprise an electrical resistance exceeding a minimal resistance threshold associated with hydrogen generation or arc generation.

4. The cooling system of Claim 3, wherein the minimal resistance threshold is based on a product of a resistivity of the conductive fluid and a length of the first and second fluid return paths.

5. The cooling system of Claim 3, wherein the first and second fluid return paths each comprise a length such that the electrical resistance exceeds the minimal resistance threshold.

6. The cooling system of Claim 5, wherein the first and second fluid return paths are electrically isolated along the lengths.

7. The cooling system of Claim 5, wherein the first and second fluid return paths merge after the lengths have been exceeded.

8. The cooling system of claim 7, wherein the merged paths feed into a heat exchanger.

9. The cooling system of Claim 1, wherein the first fluid return path is in contact with a positive conductor of the at least one pair of conductors, and the second fluid return path is in contact with a negative conductor of the at least one pair of conductors.

10. The cooling system of Claim 1, where the conductive fluid comprises an ethylene glycol and water mixture.

11. The cooling system of Claim 3, further comprising a feedback and control component configured to determine resistive properties of the conductive fluid and adjust at least one resistive property of the conductive fluid to maintain the electrical resistance above the minimal resistance threshold.

12. The cooling system of Claim 11, wherein the feedback and control component is configured to measure leakage electrical current in the conductive fluid.

13. The cooling system of Claim 11, wherein the feedback and control component comprises an ion filter configured to modify resistive properties of the conductive fluid.

14. The cooling system of Claim 1, wherein the connector comprises outer jackets around the at least one pair of conductors, the outer jackets defining cooling paths for the conductive fluid between the outer jackets and the at least one pair of conductors.

15. The cooling system of Claim 1, further comprising a power source configured to provide electrical current to the connector.
